# EUROPEAN PATENT SPECIFICATION

(11) **EP 1 134 464 B1**
(45) Date of publication and mention of the grant of the patent: **15.09.2004**
(21) Application number: 01103712.4
(22) Date of filing: 15.02.2001
(51) Int. Cl.: F16J 15/32

(54) **Multifunctional unit for rolling bearings**
Mehrzweckvorrichtung für Wälzlager
Unité multifonctionnelle pour paliers à roulements

(30) Priority: 17.03.2000 IT TO000248
(43) Date of publication of application: 19.09.2001
(73) Proprietor: SKF INDUSTRIE S.P.A., 10121 Torino (IT)
(72) Inventor: Vignotto, Angelo, 10134 Torino (IT); Giai, Bruno, 10060 Abbadia Alpina (TO) (IT)
(74) Representative: Lotti, Giorgio

(56) References cited:
- EP-A- 0 495 323
- EP-A- 0 524 133
- DE-A- 4 018 796
- FR-A- 2 546 997
- US-A- 5 863 124

## Description

The present invention concerns a multifunctional unit for rolling bearings.

Normally, the multifunctional units for well-known types of rolling bearings comprise a first substantially rigid screen coupled to an outer rotary ring of the bearing, a second substantially rigid screen coupled to a fixed inner ring of the bearing, and a rubber lip fixed to the first screen and extending to come into contact with the second screen for the dynamic protection of the bearing.

It has been found that, once installed on the respective bearings, the multifunctional units of the type described above, while having demonstrated that they possess a high level of efficiency when in use, have presented some disadvantages which are essentially due to the instability between the two screens, which, in the more serious cases, has involved the separation of the two screens from each other.

The scope of the present invention is to realise a multifunctional unit for rolling bearings, which will permit a higher level of reliability as regards its assembly during transport, without, despite this fact, having any other than a minimal effect on the production costs of said multifunctional unit for rolling bearings.

According to the present invention a multifunctional unit for rolling bearings is proposed, as disclosed in US-A-5 863 124 and further characterised in that a second radial element extends from the second screen towards the first screen in a position which is axially and radially staggered regarding the first radial element.

The invention will be now described with reference to the attached drawings, showing a not limiting embodiment of the invention, in which:
- figure 1 illustrates in axial section, with parts removed for clarity, one preferred embodiment of the multifunctional unit of the present invention; and
- figure 2 illustrates, on an enlarged scale, a detail of figure 1.

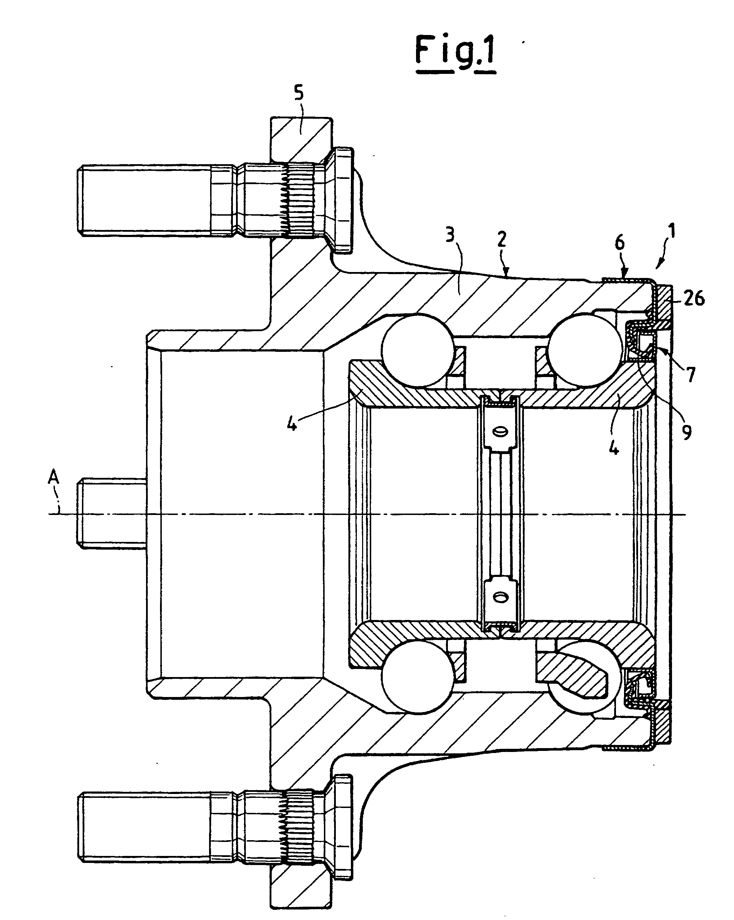

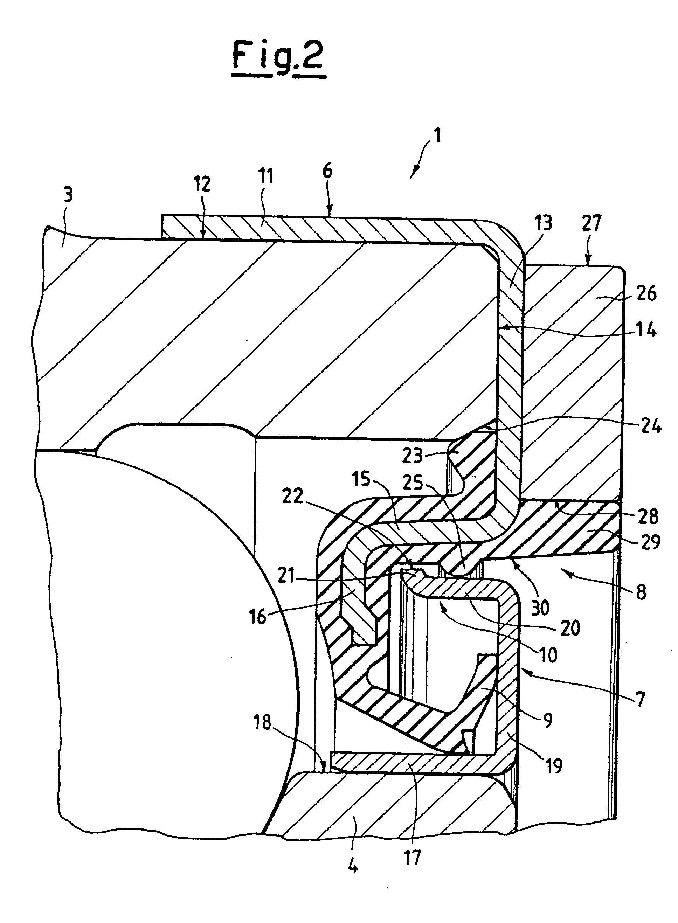

With reference to figures 1 and 2, the number 1 indicates, in its entirety, a multifunctional unit for rolling bearings 2, in particular, bearings for conducted wheels comprising an outer rotary ring 3, a fixed internal ring 4, and a flange 5 fixed to the outer ring and transversal to a rotational axis A of the bearing 2.

Unit 1 comprises two substantially rigid screens 6 and 7, respectively coupled to the outer ring 3 and to the internal ring 4, and a rubber seal 8 which is fixed to the screen 6 and provided with a double contact lip 9 extending to contact the screen 7 for the dynamic protection of the bearing. Unit 1 comprises, moreover, an assembling device 10 which is interposed between the two screens 6 and 7 in order to assemble between them the screens 6 and 7 and to prevent their mutual decoupling both during transport and during the assembly of the unit 1 to the bearing 2.

The screen 6 comprises a cylindrical wall 11 fixed on a cylindrical, external surface 12 of the outer ring 3, and an annular wall 13 fixed to said wall 11, and arranged to strike against a front, annular surface 14 of the ring 3. Wall 11 and wall 12 are orthogonally arranged in relation one to the other, and while the wall 11 allows a simplification of the working of the bearing 2 with respect to the cases in which such wall 11 is inserted to the inside of ring 3, wall 12 allows, instead, the increased simplification of both the driving of the unit 1 on the bearing 2, and the control of said driving.

The screen 6 further comprises a shaped wall 15, which axially extends towards the inside of the bearing 2 from the wall 13, and is provided with a free, annular attachment 16, which is transversal to the axis A and supports the lip 9.

The screen 7 comprises a cylindrical wall 17 fixed on an inner surface 18 of the internal ring 4, and an annular wall 19, which is fixed to said wall 17, and is arranged substantially coplanar to the wall 13. Screen 7 comprises, moreover, a further cylindrical wall 20, which axially extends towards the inside of the bearing 2 from the wall 19, and is provided with a free edge 21 which is radially folded towards the outside in order to face the seal 8. In particular, the edge 21 is radially delimited towards the outside by a cylindrical surface 22, which is coaxial to the axis A, has a radius ρ₁ of determined length, and is faced (pointed out) directly towards the seal 8.

Seal 8 completely covers both the surfaces of the wall 15 and the part of the wall 13 which extends beyond the surface 14, and is further provided with a lip 9 which is arranged to form a sliding contact with the wall 17 and the wall 19 of the screen 7; seal 8 provides a further rubber lip 23 which axially extends towards the inside from the wall 13 to come into contact with the surface 14. In particular, the surface 14, on the inner part of the ring 3, is provided with a conical bevel 24 against which lip 23 leans directly in order to render the screen 6 statically hermetic; however, according to a further embodiment, which is not illustrated, the lip 23 can also be arranged directly contact with the part of the surface 14 transversal to the axis A.

Seal 8 further comprises an annular, shaped edge 25, which directly faces the wall 20, and is provided with an inner radius ρ₂ which is shorter than the radius ρ₁ of the edge 21, and defines the assembling device 10 together with the edge 21. In particular, because of the radial interference of the edges 21 and 25 due to the different dimensions of the respective radius ρ₁ and ρ₂, the assembly of the screens 6 and 7 takes place by axially forcing the edge 21 against the edge 25, and arranging, which said assembly is complete, said edge 21 in a position which is axially staggered towards the inside of the bearing 2 in relation to the edge 25.

Depending on the requirements, the unit 1 can comprise, as in the embodiment presently described, an encoder 26, which is mounted frontally and fixedly to the annular wall 13 of the screen 6, and is defined by an annular element with substantially rectangular cross-sectional section radially delimited towards the outside by a cylindrical surface 27 of a diameter which is inferior to a diameter of the wall 11, and is radially delimited towards the inside by a further cylindrical surface 28 of a diameter which is substantially inferior to a diameter of the wall 15.

The difference in diameter between the surface 27 and the wall 11 allows a simple assembly of the unit 1 using standard equipment, while the space left due to the different dimensions between the surface 28 and the wall 15 is overwhelmed by a connecting portion 29 of the seal 8. Portion 29 axially extends towards the outside of bearing 2, at least by the edge 25, and is radially limited towards the inside by a conical surface 30 which is oriented with a vertex to the inside of the bearing 2. The tapering of the surface 30 determines a centrifugal effect towards the outside of the bearing 2 so as to further increase the dynamic protection of the bearing 2.

In the embodiment in which the encoder 26 is not mounted on the wall 13, the assembly operations of the unit 1 on the bearing 2 will be further simplified, having all the surface 14 available in order to exercise against it whichever type of axial force.

From the above, it is obvious that the adoption of the present unit 1 provides important advantages both in terms of ease and reliability of assembly, and in terms of stability during transport.

It is intended that the invention is not limited to the embodiments herein described and illustrated, which are to be considered as examples of the multifunctional unit, which, instead, is susceptible to further modifications to shape and disposition of parts, constructive details and details of assembly.

## Claims

1. Multifunctional unit (1) for rolling bearings comprising a first substantially rigid screen (6) coupled to an outer rotary ring (3) of the bearing (2), a second substantially rigid screen (7) coupled to a fixed inner ring (4) of the bearing (2), and a rubber seal (8) fixed to the first screen (6) and having a first double contact lip (9) extending to come into contact with the second screen (7) for the dynamic protection of the bearing (2); the unit (1) further comprising assembling means (10), interposed between said two screens (6, 7), to assemble between them said screens (6, 7) preventing any mutual decoupling, and comprising, in turn, a first radial element (25) extending from the first screen (6) towards the second screen (7); **characterised in that** a second radial element (21) extends from the second screen (7) towards the first screen (6) in a position which is axially and radially staggered regarding the first radial element (25).

2. Unit according to claim 1, **characterised by** the fact that the first and the second radial elements (21, 25) form part, respectively, of said rubber seal (8) and of said second screen (7), and are defined by a rubber shaped edge which radially extends towards the inside from the seal (8), and, respectively, by an end, free edge of the second screen (7), which is radially folded towards the outside.

3. Unit according to claim 1, **characterised by** the fact that the first screen (6) comprises a cylindrical wall (11) which is fixed on a cylindrical, external surface (12) of said outer ring (3), and an annular wall (13) which is fixed to said cylindrical wall (11), and arranged against a front, annular surface (14) of said outer ring (3).

4. Unit according to claim 3, **characterised by** the fact that the seal (8) comprises a second rubber lip (23) axially extending towards the inside from the annular wall of the first screen (6) to substantially come into contact with the frontal surface (14) of the outer ring (3).

5. Unit according to claim 3, **characterised by** the fact that it comprises a encoder (26) mounted in front of the annular wall (13) of the first screen (6); the seal (8) comprising a connecting portion (29) axially extending towards the outside at least from the first radial element (25), and radially limited towards the inside by a conical surface (30) oriented with a vertex to the inside of the bearing (2).

## Patentansprüche

1. Mehrzweckvorrichtung (1) für Wälzlager, umfassend eine erste, im wesentlichen starre Blende (6), die an einen äußeren Drehring (3) des Lagers (2) gekuppelt ist, eine zweite, im wesentlichen starre Blende (7), die an einen starren inneren Ring (4) des Lagers (2) gekuppelt ist, und eine Gummidichtung (8), die an der ersten Blende (6) befestigt ist und einen ersten Doppelkontaktrand (9) aufweist, der sich zur Kontaktaufnahme mit der zweiten Blende (7) zum dynamischen Schutz des Lagers (2) erstreckt; wobei die Vorrichtung (1) ferner Zusammenbaumittel (10) umfaßt, die zwischen den zwei Blenden (6, 7) zum Zusammenbauen der Schirme dazwischen angeordnet sind und jegliche gegenseitige Entkupplung verhindern, und wiederum ein erstes radiales Element (25) umfaßt, das sich von der ersten Blende (6) zur zweiten Blende (7) hin erstreckt, **dadurch gekennzeichnet, daß** sich ein zweites radiales Element (21) von der zweiten Blende (7) zu der ersten Blende (6) in eine Position erstreckt, die bezüglich des ersten radialen Elements (25) axial und radial versetzt ist.

2. Vorrichtung nach Anspruch 1, **dadurch gekennzeichnet, daß** das erste und zweite radiale Element (21, 25) jeweils ein Bestandteil der Gummidichtung (8) und der zweiten Blende (7) bildet und durch eine gummigeformte Kante, die sich radial zur Innenseite der Dichtung (8) hin erstreckt, bzw. durch eine freie Endkante der zweiten Blende (7), die radial zur Außenseite hin gefaltet ist, definiert ist.

3. Vorrichtung nach Anspruch 1, **dadurch gekennzeichnet, daß** die erste Blende (6) eine zylindrische Wand (11), die an einer äußeren, zylindrischen Oberfläche (12) des äußeren Rings (3) befestigt ist, und eine ringförmige Wand (13) umfaßt, die an der zylindrischen Wand (11) befestigt ist und gegen eine vordere, ringförmige Oberfläche (14) des äußeren Rings (3) angeordnet ist.

4. Vorrichtung nach Anspruch 3, **dadurch gekennzeichnet, daß** die Dichtung (8) einen zweiten Gummirand (23) umfaßt, der sich von der ringförmigen Wand der ersten Blende (6) axial zur Innenseite erstreckt, um mit der vorderen Oberfläche (14) des äußeren Rings (3) im wesentlichen in Kontakt zu kommen.

5. Vorrichtung nach Anspruch 3, **dadurch gekennzeichnet, daß** sie eine Codiervorrichtung (26) umfaßt, die an der Vorderseite der ringförmigen Wand (13) der ersten Blende (6) angebracht ist; wobei die Dichtung (8) einen Verbindungsabschnitt (29) umfaßt, der sich zumindest von dem ersten radialen Element (25) axial zur Außenseite erstreckt und zur Innenseite hin durch eine konische Oberfläche (30) radial begrenzt ist, die mit einer Spitze zur Innenseite des Lagers (2) ausgerichtet ist.

## Revendications

1. Unité multifonctionnelle (1) pour paliers à roulements comprenant un premier écran sensiblement rigide (6) couplé à une bague rotative externe (3) du palier (2), un second écran sensiblement rigide (7) couplé à une bague interne fixe (4) du palier (2), et un joint en caoutchouc (8) fixé sur le premier écran (6) et ayant une première lèvre de contact double (9) s'étirant pour venir en contact avec le second écran (7) afin d'assurer la protection dynamique du palier (2) ; l'unité (1) comprenant en outre des moyens d'assemblage (10), interposés entre lesdits deux écrans (6, 7), afin d'assembler entre eux lesdits écrans (6, 7) empêchant tout découplage mutuel, et comprenant, à son tour, un premier élément radial (25) s'étirant depuis le premier écran (6) vers le second écran (7), **caractérisée en ce qu'**un second élément radial (321) s'étire depuis le second écran (7) vers le premier écran (6) dans une position qui est décalée de manière axiale et radiale par rapport au premier élément radial (25).

2. Unité selon la revendication 1, **caractérisée par le fait que** les premier et second éléments radiaux (21, 25) font partie, respectivement, dudit joint en caoutchouc (8) et dudit second écran(7), et sont définis par un bord profilé en caoutchouc qui s'étire de manière radiale vers l'intérieur depuis le joint (8), et, respectivement, par un bord libre du second écran (7), qui est plié de manière radiale vers l'extérieur.

3. Unité selon la revendication 1, **caractérisée par le fait que** le premier écran (6) comprend une paroi cylindrique (11) qui est fixée sur une surface cylindrique externe (12) de ladite bague externe (3), et une paroi annulaire (13), qui est fixée sur ladite paroi cylindrique (11), et agencée contre une surface annulaire avant (14) de ladite bague externe (3).

4. Unité selon la revendication 3, **caractérisée par le fait que** le joint (8) comprend une seconde lèvre en caoutchouc (23) s'étirant de manière axiale vers l'intérieur depuis la paroi annulaire du premier écran (6) pour venir sensiblement en contact avec la surface frontale (14) de la bague externe (3).

5. Unité selon la revendication 3, **caractérisée par le fait qu'**elle comprend un codeur (26) monté devant la paroi annulaire (13) du premier écran (6) ; le joint (8) comprenant une partie de raccordement (29) s'étirant de manière axiale vers l'extérieur au moins depuis le premier élément radial (25), et limitée de manière radiale vers l'intérieur par une surface conique (30) orientée par une pointe vers l'intérieur du palier (2).
